# EUROPEAN PATENT SPECIFICATION

(11) **EP 3 019 742 B1**
(45) Date of publication and mention of the grant of the patent: **21.06.2017**
(21) Application number: 14789370.5
(22) Date of filing: 07.07.2014
(51) Int. Cl.: F03D 3/04, F03D 3/02

(54) **VERTICAL AXIS WIND TURBINE**
WINDTURBINE MIT VERTIKALER ACHSE
TURBINE ÉOLIENNE À AXE VERTICAL

(30) Priority: 12.07.2013 IT PI20130067
(43) Date of publication of application: 18.05.2016
(73) Proprietor: Treecube S.r.l., 19021 Arcola (SP) (IT)
(72) Inventor: VALENTI, Luca, I-19123 La Spezia (IT)
(74) Representative: Celestino, Marco
(86) International application number: PCT/IB2014/062913
(87) International publication number: WO 2015/004588

(56) References cited:
- WO-A1-2011/001375
- US-A1- 2010 230 974

## Description

### Field of the invention

The present invention relates to the field of wind turbines.

In particular, the invention relates to the field of vertical axis wind turbines with outer casing structure, or case.

### Description of the prior art

Wind turbines can be subdivided into two large categories depending on the rotor direction: horizontal axis turbines and vertical axis turbines.

An example of horizontal axis turbines are the windmills, where the rotation axis of the rotor is arranged substantially aligned with the prevailing air flow direction. Usually, the rotation axis can rotate in turn, usually about a vertical axis, in order to achieve and/or keep the alignment of the rotation axis of the rotor with the prevailing air flow direction of. In this type of machines all the blades are invested at the same time by air flow and all the blades take part positively to the rotation of the rotor.

Horizontal axis turbines have the drawbacks of requiring much space for installation and of being characterized by a high mechanical complexity. These drawbacks cause a high production and installation costs, besides having a big visual impact on the landscape, once installed.

Vertical axis turbines have a rotation axis arranged substantially orthogonal to the prevailing air flow direction. In this type of machine, an air flow doesn't produce the same effect when it hits the blades: in particular, considering the path of a single blade, it is possible to distinguish a "motor path", where air flow that acts on the blade contributes positively to the rotation of the rotor, and a "resistant path", where air flow that acts on the blade contributes negatively to the rotation of the rotor or, in any case, the contribution is less than the contribution given by "motor path ".

Vertical axis turbines are characterized by a reduced mechanical complexity (with respect to horizontal axis turbines) because, for example, they are not necessarily devices that perform and/or maintain the alignment between the rotor axis and the prevailing air flow direction. Such feature explains why this type of machines has both a production cost and a maintenance cost that lower than horizontal axis machines.

However, vertical axis turbines have the drawback of having an efficiency lower than horizontal axis turbines. To overcome this drawback, and to increase the efficiency, different solutions have been adopted.

A first solution, provided by documents like US5852331A, JP2005299621A and WO2011/086406A2, is that of shielding the "resistant path" to avoid that the air flow can act on the blade, reducing the overall efficiency.

Another possible solution, disclosed for example in WO81/03683, US5852331A, JP2005299621A and WO2011/086406A2, is that of prearranging a convergent duct that accelerates air flow affecting the blades, increasing the speed of the rotor.

A further solution, described for example in FR2541383A1, consists of improving the feeding efficiency of the rotor, by directing the air flow towards the outer diameter of the rotor.

However, all the wind turbines described in the above cited documents require a high air flow speed to be activated, not allowing receiving the momentum supplied by the wind in not very windy regions or in any case in periods, which can be long, in which the wind doesn't reach a predetermined speed.

Furthermore, some of the above described turbines, like WO81/03683, require necessarily to be oriented with respect to the prevailing air flow direction, preventing exploitation of a large part of the windy components that act on the blades.

A possible solution to the problem of directing the turbine in the air flow direction is disclosed, for example, in DE29980074U1 and US2011/291421A1, in which an outer case enclosing rotor and blades is provided. The outer case is furthermore equipped with a plurality of openings that operate both as inlet and outlet of the flow, according to the wind direction, and that convey air flow to the blades.

However, also such solutions are not much aerodynamically efficient, since the side edge of the openings is right and does not allow neithera good flow rate nor a high flow speed as inlet.

### Summary of the invention

It is therefore a feature of the present invention to provide a vertical axis wind turbine that has higher efficiency compared to vertical axis wind turbines of prior art.

It is also a feature of the present invention to provide a vertical axis wind turbine that can start the rotation of the blades at air flow speeds lower than the wind turbines of prior art.

It is also a feature of the present invention to provide a vertical axis wind turbine that has an efficiency substantially constant responsive to the wind direction.

It is a further feature of the present invention to provide a vertical axis wind turbine that has higher structural resistance both static and to fatigue with respect to the wind turbines of prior art.

It is still a feature of the present invention to provide a vertical axis wind turbine that has a production and installation cost reduced with respect to the wind turbines of prior art.

It is also a feature of the present invention to provide a system of wind energy generation for arranging a plurality of wind turbines, in order to reduce, under a same power installed, the space occupied with respect to systems of wind energy generation of prior art.

It is then a feature of the present invention to provide a vertical axis wind turbine that, in case of break of a component of the rotor, does not cause eject in the environment potentially dangerous fragments.

These and other objects are achieved by a vertical axis wind turbine comprising:
- a rotor having a substantially vertical rotation axis z, said rotor comprising a plurality of blades arranged to rotate about said rotation axis z in consequence of an aerodynamic drag opposed to an air flow investing said blades;
- a casing structure in which the rotor is housed. Advantageously, the casing structure comprises:
   - a lower plate, substantially orthogonal to the rotation axis z and defined by a first plurality of vertices V₁,...,Vₙ;
   - an upper plate, substantially orthogonal to the rotation axis z, and defined by a second plurality of vertices V₁',...,Vₙ', each vertex V₁',...,Vₙ' of the second plurality corresponding to a vertex V₁,...,Vₙ of the first plurality;
   - a plurality of walls arranged to connect the lower plate and the upper plate, said walls and said plates defining a plurality of openings through which an air flow is arranged to enter/exit the casing structure.

In particular, each wall is defined by a respective edge arranged to connect a vertex V₁,...,Vₙ of the first plurality with a corresponding vertex V₁',...,Vₙ' of the second plurality.

Advantageously, each edge has a profile protruding outwards from the casing structure, said protruding profile arranged to protrude beyond a corresponding straight line V₁-V₁',...,Vₙ-Vₙ' connecting the vertex V₁,...,Vₙ of the first plurality with the corresponding vertex V₁',...,Vₙ' of the second plurality.

This way, an entering air flow, which enters the casing structure through a first opening, can slide on the adjacent wall, which works as a convergent duct. The edge protruding outwards from such wall increases the resistance opposed to the air flow and deviates the air flow that does not enter the casing structure, so that, for most wind directions, this air flow is detached from the above described wall, creating, at a second opening, adjacent to the wall opposite to the first opening, which works as outlet for an exiting air flow, a low-pressure zone that increases the flow rate of the entering air flow that enters casing structure, increasing then the wind power exploited by the turbine. Furthermore, the low-pressure at second opening allows the turbine, when starting, to operate for speeds of entering air flow lower than in turbines of prior art.

Essentially, therefore, low-pressure at second opening, generated by the presence of protruding edge, allows both to start more easily the turbine when the air flow is in transient state, both to increase the power when air flow is in steady state.

In particular, the edge protruding outwards has curvilinear geometry with concavity oriented towards a respective opening, in order to act as the opening of a duct arranged to direct the air flow entering the casing structure.

More in detail, the protruding edge has a shape of circular arc of predetermined radius.

Advantageously, at least one wall of the plurality of walls has a protruding portion, which starts from said edge, and configured in such a way that its projection in the plane of the lower plate is external to an ideal polygon joining the vertices V₁,...,Vₙ of the lower plate to one another. The wall also comprises also a recessed portion whose projection in the plane of the lower plate is internal to the polygon, said recessed portion extending up to an opening adjacent to the wall, beyond an end of the wall opposite to the edge. This way, a separation of air flow by the wall is carried out substantially for any air flow direction, and in particular also for directions parallel to the wall.

In particular, to further assist the separation of the air flow also for directions of the flow parallel to the wall, the edge of the wall has a thickness higher than the remaining part of the wall.

Advantageously, the lower plate is defined by profiles that connect two by two the vertices V₁,...,Vₙ and that are recessed towards the rotation axis z with respect to said polygon, in order to adapt to recessed portions of the walls.

Advantageously, the upper plate is defined by profiles that connect two by two the vertices V₁',...,Vₙ' and that are recessed towards the rotation axis z with respect to said polygon, in order to adapt to recessed portions of the walls. This way, the air flow that slides outside on the walls does not meet the surface of the plates that would interfere with the motion of the flow, and would also increase friction drag and loose energy.

In particular, the profile that defines the two plates has a point of maximum M, i.e. a point where there is the greatest distance between the profile and the corresponding edge of the polygon which connects the vertices V₁,...,Vₙ or the vertices V₁',...,Vₙ'. This point of maximum M is located near the above described end of the walls. Each wall then maintains a substantially constant inclination from the edge to the end, beyond which the wall breaks, thus leaving space to the adjacent opening. This way, each wall, in addition to work as obstacle for creating the low-pressure at the outlet, works also as convergent duct for the air flow that enters the casing structure.

Advantageously, each profile that joins two plates has a tangent line between 0° and 30° with respect to a corresponding edge of an ideal polygon that connects the vertices V₁,...,Vₙ, to the farthest vertex from recessed portion of the wall. This way, the profile meets the inclination of the wall, which works as convergent duct with inclination of 30°.

Advantageously, each profile joining the plates comprises, at the corresponding opening, a straight portion which is used to strengthen the structure, giving to the wall a stiffening effect that prevents it from bending when it is subjected to heavy aerodynamic loads.

Advantageously, on the outer surface of the walls ribs with substantially reticular geometry are provided, that, in addition to assist the structural resistance of the walls, further assist the separation of the air flow, and, in particular of the boundary layer, from the walls.

In particular, the casing structure comprises four walls, which are of identical shape and are at an angle of 90° from each other about axis z, which define four openings configured to work as inlet/outlet for the air flow in/from the casing structure. Such configuration is aerodynamically optimal and allows an efficiency that is much less variable responsive to changes of the wind direction. Furthermore, by having identical components, it reduces the production costs and assists the assembly of the turbine.

Advantageously, a first opening among the four openings is configured to allow a main air flow component to enter, said first opening being adjacent to a first wall of the four walls and to a second wall of the four walls, substantially orthogonal to the first wall. This way, when the main air flow component enters first opening, part of the air flow is hampered by the first and second walls, creating a low pressure zone at a second opening, adjacent to the second wall, and at a fourth opening, adjacent to the first wall, a third opening being opposite to the first opening.

This way, the low-pressure zone at the second opening allows both to start more easily the turbine when the air flow is in transient state, both to increase the power when air flow is in steady state. At the same time, the low-pressure zone at the fourth opening contributes to cause the air flow to exit from the casing structure, through the fourth opening, allowing emptying the "resistant path" of the rotor and thus reducing the resistance encountered by the rotor in its rotation. Such lower resistance causes an improvement of the overall efficiency of the wind turbine, allowing to further lower the value of the wind speed for which the turbine comes into operation at start up.

According to another aspect of the invention, a system of wind energy generation comprises at least two wind turbines, according to the present invention, which are located above each other, in such a way that the rotation axes z of the wind turbines are coincident. This way, it is possible to create systems of wind power generation that require a surface of installation substantially the same as the surface necessary to a single turbine. This allows to strongly optimize the space with respect to the systems of wind power generation of prior art, which usually provide the arrangement of several wind turbines in a triangle or in a square, thus needing a surface of installation much bigger than that required for a single turbine. Furthermore, owing to the nature of the wind turbine according to the invention, such an arrangement in column does not affect the performance of the individual turbines with respect to each other.

Advantageously, the wind turbines are rotationally shifted with respect to the rotation axis z of a predetermined angle from each other.

In particular, the predetermined angular offset is set between 20° and 40°, advantageously, it is equal to 30°.

This way, it is further increased, with respect to the single wind turbine, the invariance of the performances of the wind system responsive to the wind direction. Furthermore, this arrangement with angular offset distributes in a more balanced way the aerodynamic loads, especially fatigue loads that would affect the system, reducing the possibility of resonance phenomena and allowing a higher life of the components.

### Brief description of the drawings

Further characteristic and/or advantages of the present invention will be made clearer with the following description of some exemplary embodiments, exemplifying but not limitative, with reference to the attached drawings in which:
- Fig. 1 shows, in a first exemplary embodiment, the rotor of a vertical axis wind turbine, according to the present invention;
- Fig. 2 shows, in a first exemplary embodiment, the casing structure of a vertical axis wind turbine, according to the present invention;
- Fig. 3 shows a vertical axis wind turbine comprising the rotor and the casing structure of Figs. 1 and 2;
- Fig. 4 shows, in a horizontal plane, a vertical axis wind turbine, according to the present invention, crossed by an air flow;
- Fig. 5 shows, in a horizontal plane and in detail, the vertical axis wind turbine of Fig. 4;
- Fig. 6 shows a system of wind energy generation, according to the present invention, in a first exemplary embodiment;
- Fig. 7 shows a system of wind energy generation, according to the present invention, in a second exemplary embodiment.

### Description of a preferred exemplary embodiment

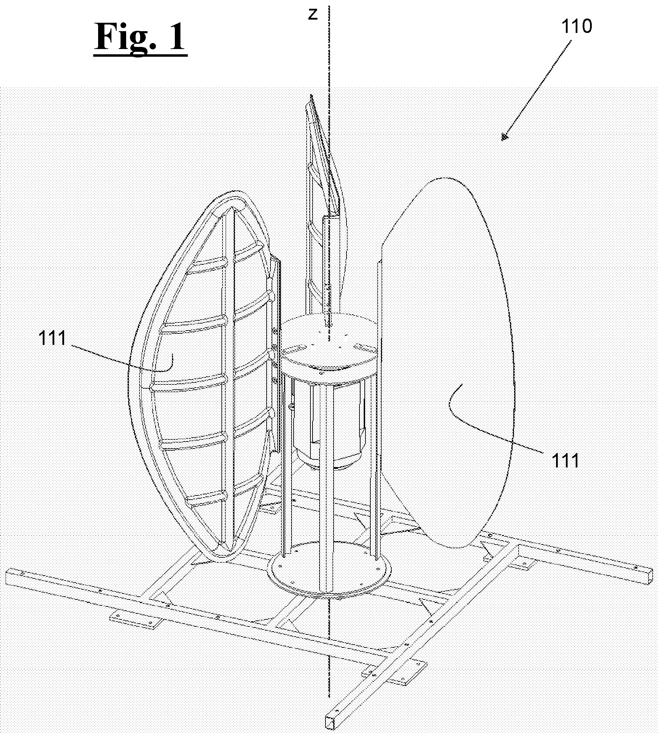

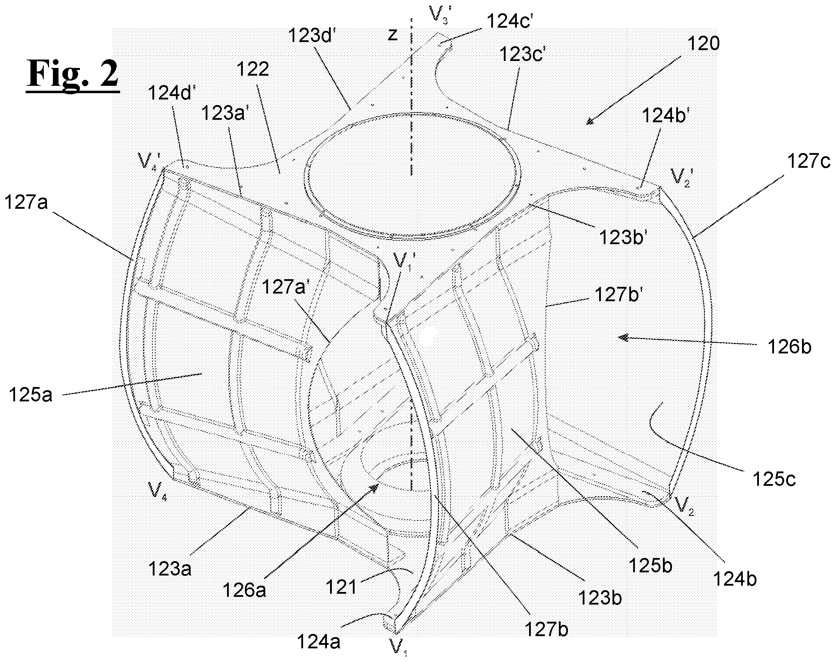

With reference to Figs. 1, 2 and 3, an exemplary embodiment of a vertical axis wind turbine 100, according to the present invention, comprises a rotor 110 (Fig.1) and a casing structure 120 (Fig.2) that houses the rotor 110.

With reference to Fig. 1, rotor 110 comprises a plurality of blades 111, in particular 3, which are arranged in an axial-symmetric way with respect to a vertical rotation axis z, about which the blades 111 are wheeled, as consequence of the aerodynamic drag opposed to an air flow that invest blades 111.

With reference to Fig. 2, casing structure 120 comprises a lower plate 121 and an upper plate 122, substantially orthogonal to the axis z, and defined, respectively, by a first plurality of vertices, in particular four vertices, V₁, V₂, V₃, V₄ and a second plurality of vertices, in particular four vertices, V₁', V₂', V₃', V₄'. The two plates 121 and 122 are connected to each other through a plurality of walls, in particular four walls, 125a-125d, which create, with the two plates 121,122, four openings 126a-126d that work, according to the direction of air flow that crosses the casing structure 120, as air flow inlet and/or outlet ports. The walls 125a-125d, as well as all the other side elements of the casing structure 120, are equal to each other and repeated for each one of four sides V₁-V₂, V₂-V₃, V₃-V₄, V₄-V₁.

Such exemplary embodiment provides that each of walls 125a-125d is defined by edges 127a-127d, each of which connects one of the vertices V₁, V₂, V₃, V₄ with one of the corresponding vertices V₁', V₂', V₃', V₄'. In particular, each edge 127a-127d is protruding outwards from the casing structure 120 with respect to the corresponding vertical line that connects one of the vertices V₁, V₂, V₃, V₄ with one of the corresponding vertices V₁', V₂', V₃', V₄'.

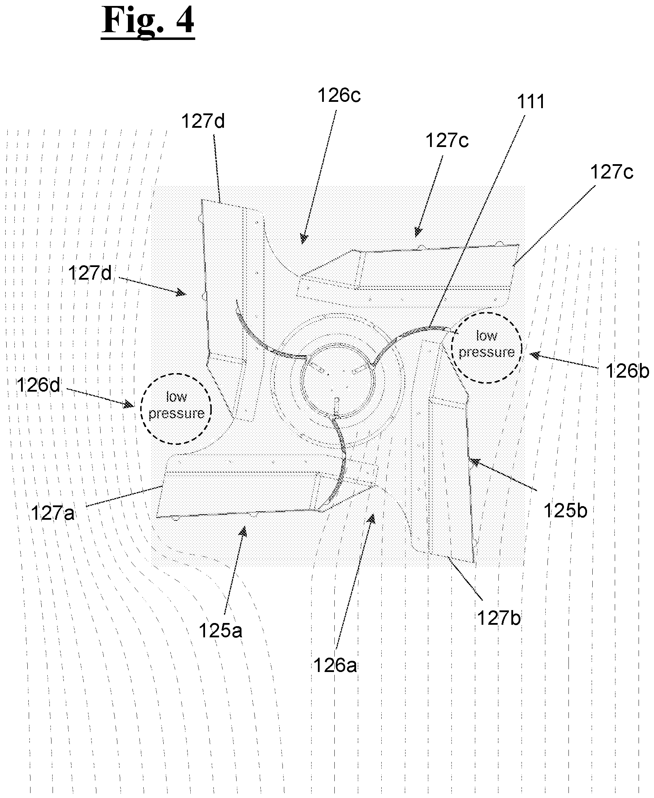

This way, with reference to Fig. 4, an air flow that enters casing structure 120 through, for example, a first opening 126a, slides on adjacent wall 125b, which works as convergent duct. The edge 127b, protruding outwards from wall 125b, increases the resistance opposed to the air flow and deviates the air flow that does not enter casing structure 120, so that, for the majority of the wind directions, this air flow is separated by the wall 125b creating, at a second opening 126b, which is adjacent to the wall 125b and that works as outlet of the air flow, a low-pressure zone that increases the air flow rate that enters casing structure 120, increasing then the wind power exploited by the turbine 100. Furthermore, the low-pressure at the second opening 126b allows the turbine to operate for start up speeds of inlet air flow lower than turbines of prior art.

In essence, therefore, the low-pressure at opening 126b, generated by the presence of protruding edge 127b, allows both to assist the start up of turbine 100 when the air flow is in transient state, and to increase the power when the air flow is in steady state.

Furthermore, wall 125a, thanks to edge 127a, which is also protruding, opposes a resistance against the air flow that allows an immediate separation of such air flow, generating, in a similar way as above said, a low-pressure zone at a fourth opening 126d, which is also useful for the exit of the air flow from the casing structure 120.

Such low-pressure zone on the fourth opening 126d contributes to cause the air flow to exit from the casing structure 120, through the opening 126d, allowing emptying the "resistant path" of the rotor 110 and then reducing the resistance encountered by the rotor 110 in its rotation. A lower resistance causes an improvement of the overall efficiency of the wind turbine 100, allowing further to lower the value of the wind speed for turbine 100 at the start up.

In particular, the protruding edge 127b has a curvilinear shape, as a circular arc with concavity oriented towards the opening 126a, which allows the opening 126a to better convey the air flow entering the casing structure 120, assuming a shape similar to that of an inlet duct.

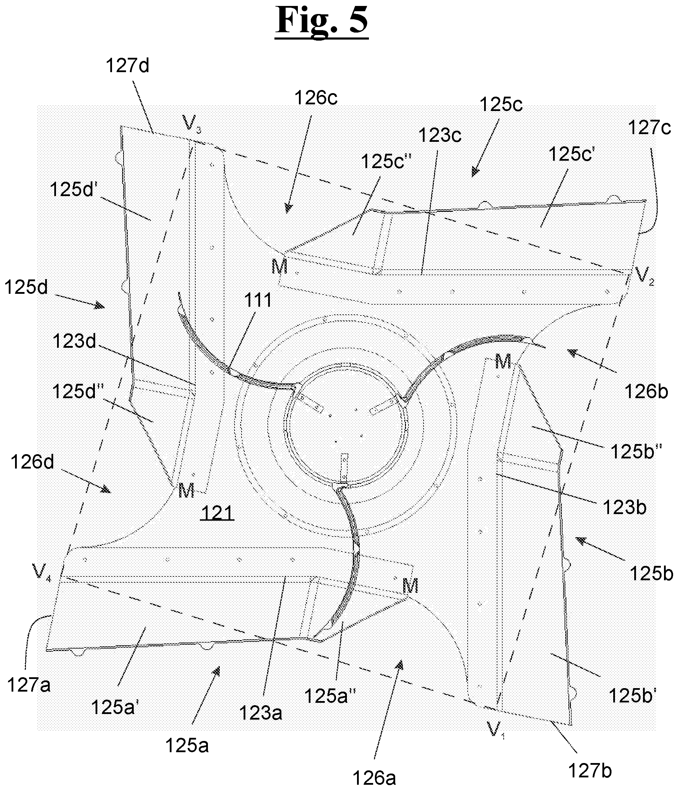

Furthermore, with reference to Fig. 5, considering an ideal square (shown as a dotted line in the figures) that connects the vertices V₁', V₂', V₃', V₄' of the upper plate 122, or similarly the vertices V₁, V₂, V₃, V₄ of the lower plate 121, the walls 125a-125d comprise a protruding portion 125a'-125d', configured in such a way that its projection in the plane of the lower plate 121 is external to the square, and a recessed portion 125a"-125d", whose projection in this plane instead remains inside the square itself.

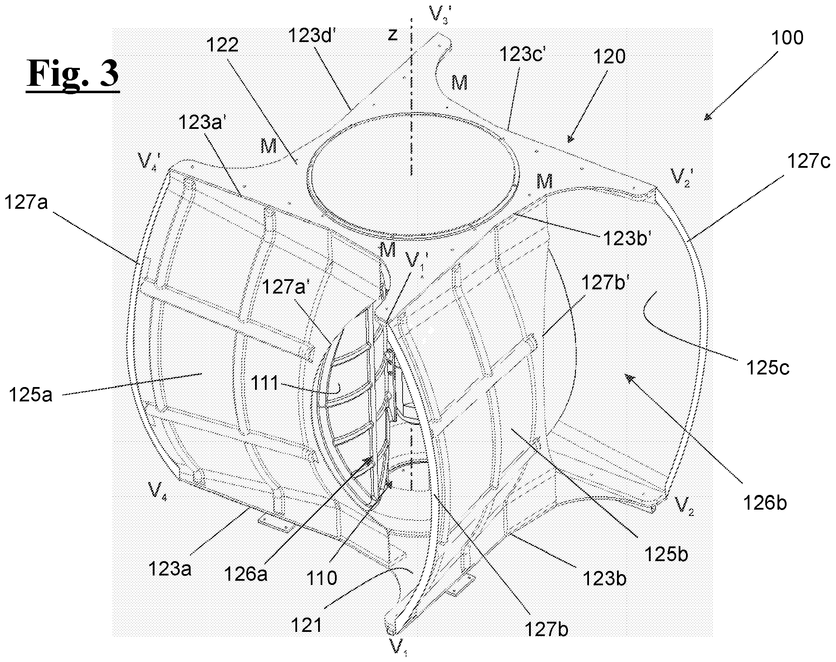

With reference again, for example, to the flow passing through the opening 126a, the protruding portion 125b'comprises edge 127b and, as said, is used for increasing the resistance opposed to the air flow, in order to allow the separation from wall 125b. The recessed portion 125b", instead, causes the low-pressure generated by said flow separation to occur exactly at outlet 126b. In particular, this embodiment allows that the phenomenon above described occurs substantially for any direction of the wind, even for those parallel to a wall 125a-125d, which is the more critic direction, at which it is much more difficult the separation of the air flow. To further assist the separation in this direction, in addition, also the edge 127a-127d may have a thickness greater than the rest of the wall 125a-125d, as shown in Figs. 2 and 3.

Still with reference to Figs. 2 and 3, the plates 121 and 122 are joined by profiles 123a-123d and 123a'-123d' that connect two by two the vertices V₁, V₂, V₃, V₄ and the vertices V₁', V₂', V₃', V₄', respectively. Such profiles 123a-123d and 123a'-123of are curvilinear and are recessing towards the rotation axis z, in order to meet the shape of the walls 125a-125d, and, in particular of recessing portions 125a"-125d". This way, an air flow that slides outside on walls 125a-125d does not encounter the surface of the plates that would interfere with the motion of the flow, and would also increase the friction drag and loose energy.

Geometrically, then, profiles 123a-123d and 123a'-123d' substantially follow the trend of walls 125a-125d.

With reference to Figs. 2, 3 and 5, in an exemplary embodiment, profiles 123a-123d and 123a'-123d' have a point of maximum M, i.e. a point at which the distance between the profile and the side of said square is greatest. Such point of maximum M is located close to the recessed portion 125a"-125d", and, in particular at one end 127a'-127d' of the wall 125a-125d opposite to the edge 127a-127d. This way, the wall 125b, and similarly the other walls 125a, 125c, 125d, maintains an inclination substantially constant from edge 127a up to second edge 127a', beyond which the wall 125b is interrupted leaving space to the adjacent opening 126b.

This way, considering Fig. 4, the wall 125b, in addition to act as an obstacle to create the low-pressure at outlet 126b, acts also as convergent duct for the air flow that enters the casing structure. In particular, with reference to Fig. 5, the wall 125b, and similarly the other walls, has an inclination of about 30° with respect to the segment V₁'-V₂', or to the segment V₁-V₂. The profiles 123b and 123b', which must follow the wall 125b, have a tangent line at vertices V₁ and V₁' that is about 30°. The tangent line of profiles 123b and 123b' at the vertices V₂ and V₂', instead, is about 30° with respect to the segments V₂-V₃ and V₂'-V₃', in order to allow a wall 125c to be in turn a convergent duct with respect to the inlet 126b. With reference to Fig. 2, profiles 123b and 123b' comprise, in the part adjacent to vertices V₂ and V₂', straight portions 124b and 124b' that serve to strengthen the structure, giving to the wall 125c a stiffening effect that prevents it from bending when it is subjected to large aerodynamic loads. For the same reason, on the outer surface of walls 125a-125d, ribs with substantially reticular geometry are provided. Such stiffening ribs, in addition to contribute to the structural strength of the walls 125a-125d, also contribute to further facilitate the separation of the air flow, and, in particular of the boundary layer, from the walls.

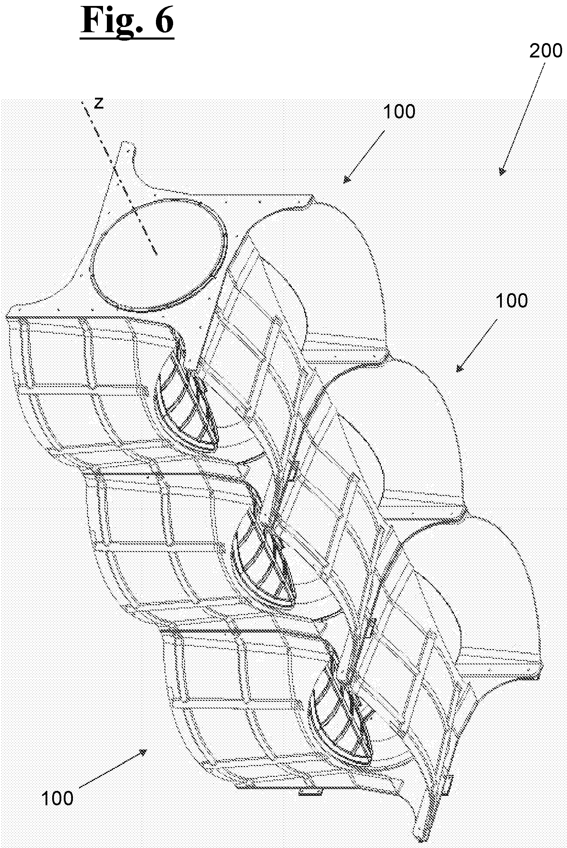

With reference to Fig. 6, the present invention provides a system of wind energy generation 200 comprising more than one wind turbine 100 as previously described. The turbines 100 are arranged above one another aligned with respect to vertical axis z. This way, systems of wind energy generation 200 can be obtained that require an installation surface substantially the same as the surface necessary to a single turbine 100. This allows to strongly optimize the space with respect to the systems of wind energy generation of the prior art, which usually provide the arrangement of multiple wind turbines in a triangle or in a square, thus requiring a surface of installation much bigger than a single turbine. Furthermore, for the nature of wind turbines 100, according to the invention, this arrangement in column does not affect the performances of singles turbines 100.

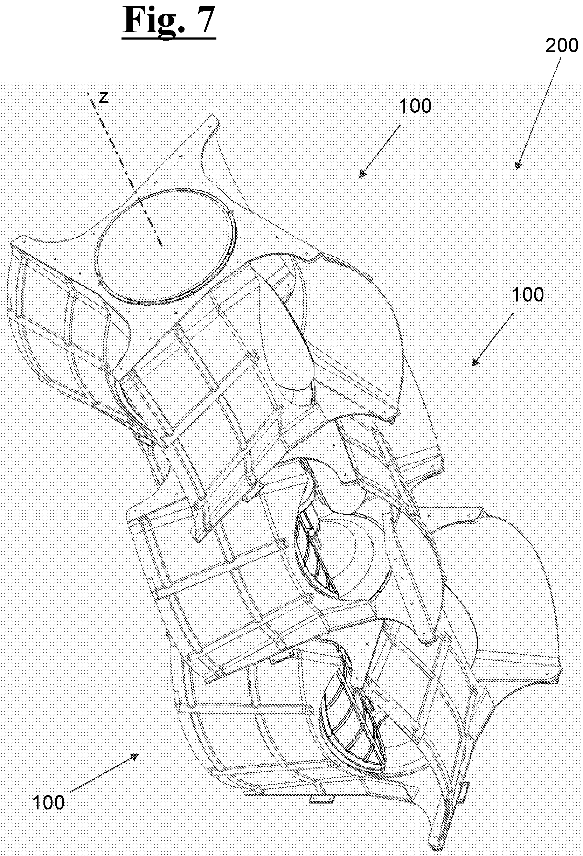

With reference to Fig. 7, an exemplary embodiment of the system of wind energy generation 200 provides that the wind turbines 100 are rotationally shifted at a predetermined angle about its axis z with respect to each other, in order to further increase, with respect to the single wind turbine 100 and to the system 100 of Fig. 6, the invariance of the performances of the wind system 100 respect to the direction of the wind.

Such predetermined angle is advantageously set between 20° and 40°, and in particular 30°. Anyway, the optimal value of this angle can result different depending on the number of wind turbines 100 arranged in column.

Furthermore, the arrangement of the turbines 100 of Fig. 7 distributes in a more balanced way the aerodynamic loads, especially fatigue loads, which the system 100 must endure, reducing the possibility of resonance phenomena and allowing a higher life of the components.

Although in the present description reference has been made with to an exemplary embodiment of the casing structure comprising four walls, also exemplary embodiments where the casing structure comprises a different number of walls are comprised.

The foregoing description of specific exemplary embodiments will so fully reveal the invention according to the conceptual point of view, so that others, by applying current knowledge, will be able to modify and/or adapt in various applications of the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. it is to be understood that the phraseology or terminology that is employed herein is for the purpose of description and not of limitation.

## Claims

1. A vertical axis wind turbine (100) comprising:
- a rotor (110) having a substantially vertical rotation axis z, said rotor (110) comprising a plurality of blades (111) arranged to rotate about said rotation axis z in consequence of an aerodynamic drag opposed to an air flow investing said blades (111);
- a casing structure (120) in which said rotor (110) is housed, said casing structure (120) comprising:
- a lower plate (121) substantially orthogonal to said rotation axis z, said lower plate (121) defined by a first plurality of vertices V₁,...,Vₙ;
- an upper plate (122) substantially orthogonal to said rotation axis z, said upper plate (122) defined by a second plurality of vertices V₁',...,Vₙ', each vertex V₁',...,Vₙ' of said second plurality corresponding to a vertex V₁,...,Vₙ of said first plurality;
- a plurality of walls (125a-125d) arranged to connect said lower plate (121) and said upper plate (122), said walls (125a-125d) and said plates (121,122) defining a plurality of openings (126a-126d) through which said air flow is arranged to enter/exit said casing structure (120);
each wall (125a-125d) of said plurality of walls defined by a respective edge (127a-127d) arranged to connect a vertex V₁,...,Vₙ of said first plurality with a corresponding vertex V₁',...,Vₙ' of said second plurality,
each said edge (127a-127d) having a profile protruding outwards from said casing structure (120), said protruding profile arranged to protrude beyond a corresponding straight line V₁-V₁',...,Vₙ-Vₙ' connecting said vertex V₁,...,Vₙ of said first plurality with said corresponding vertex V₁',...,Vₙ' of said second plurality, in such a way that when an entering air flow enters said casing structure (120) through a first opening (126a), said protruding profile of said edge (127b) generates the separation of a portion of flow from said wall (125b) creating, at a second opening (126b) adjacent to said wall (125b) opposite to said first opening (126a), a low-pressure zone that increases the flow rate of said entering air flow that enters said casing structure (120),
said wind turbine (100) **characterized in that** said edge (127a, 127b, 127c, 127d) has a curvilinear geometry with concavity oriented towards a respective opening (126d, 126a, 126b, 126c).

2. The wind turbine (100), according to claim 1, wherein on the outer surface of said walls (125a-125d) ribs are provided configured to increase the structural resistance of said walls (125a-125d) and to assist a separation of the boundary layer of said air flow from said walls (125a-125d).

3. The wind turbine (100), according to claim 1, wherein at least one wall (125a-125d) of said plurality of walls has a protruding portion (125a'-125d'), configured in such a way that its projection in the plane of said lower plate (121) is external to an ideal polygon joining the vertices V₁,...,Vₙ of said lower plate (121) to one another, said protruding portion (125a'-125d') starting from said edge (127a-127d), and a recessed portion (125a"-125d") whose projection on said plane of said lower plate (121) is internal to said polygon, said recessed portion (125a"-125d") extending up to an opening (126a-126d) adjacent to said wall (125a-125d) beyond an end (127a'-127d') of said wall opposite to said edge (127a-127d), said recessed portion (125a"-125d") configured in order to assist the air flow separation from said wall (125a-125d) for each direction of said air flow.

4. The wind turbine (100), according to claim 3, wherein at least one among said lower plate (121) and said upper plate (122) is defined by profiles (123a-123d, 123a'-123d') connecting two by two said vertices V₁,...,Vₙ of said first plurality and/or said vertices V_{1'},...,Vₙ' of said second plurality, said profiles (123a-123d, 123a'-123d') being recessed toward said rotation axis z with respect to said polygon, in such a way to fit to said recessed portions (125a"-125d") of said walls (125a-125d) of said plurality of walls.

5. The wind turbine (100), according to claim 4, wherein said profiles (123a-123d, 123a'-123d') have a point of maximum M near said end (127a'-127d') of said walls (125a-125d), said point of maximum M being the point of said profiles (123a-123d, 123a'-123d') that mostly distances itself by the corresponding segment that connects two by two said vertices V₁,...,Vₙ and/or said vertices V_{1'},...,V_{n'}.

6. The wind turbine (100), according to any of the previous claims, wherein said casing structure (120) comprises four walls (125a-125d) of identical shape located at an angle of 90° from each other about said axis z, said four walls (125a-125d), defining four openings (126a-126d), arranged to act as inlet/outlet of said air flow in/from said casing structure (120).

7. The wind turbine (100), according to claim 6, wherein a first opening (126a) of said four openings (126a-126d) is configured to allow a main component of said air flow to enter, said first opening (126a) being adjacent to a first wall (125a) of said four walls (125a-125d) and to a second wall (125b) of said four walls (125a-125d), substantially orthogonal to said first wall (125a), in such a way that, when said main component of said air flow enters said first opening (126a), part of said air flow is hampered by said first and second wall (125a, 125b), creating a low pressure zone at a second opening (126b), adjacent to said second wall (125b), and at a fourth opening (126d), adjacent to said first wall (125a), a third opening (126c) being opposite to said first opening (126a).

8. System of wind energy generation (200) comprising at least two wind turbines (100) according to any of the previous claims, said at least two wind turbines (100) being located above each other, in such a way that said rotation axes z of said wind turbines (100) are coincident.

9. System of wind energy generation (200), according to claim 8, wherein said wind turbines (100) are rotationally shifted with respect to said rotation axis z of a predetermined angle from each other set between 20° and 40°.

## Patentansprüche

1. Vertikalachse-Windturbine (100), umfassend:
- einen Rotor (110) mit einer im Wesentlichen vertikalen Drehachse z, wobei der Rotor (110) eine Vielzahl von Blättern (111) umfasst, die angeordnet sind, um als Folge eines aerodynamischen Luftwiderstands gegen einen Luftstrom, der auf die Blätter (111) tritt, um die Drehachse z zu drehen;
- eine Gehäusestruktur (120), in der der Rotor (110) aufgenommen ist, die Gehäusestruktur (120) umfassend:
- eine untere Platte (121), die im Wesentlichen orthogonal zur Drehachse z ist, wobei die untere Platte (121) durch eine erste Vielzahl von Scheitelpunkten V₁, ..., Vₙ definiert ist;
- eine obere Platte (122), die im Wesentlichen orthogonal zur Drehachse z ist, wobei die obere Platte (122) durch eine zweite Vielzahl von Scheitelpunkten V₁', ..., Vₙ definiert ist, wobei jeder Scheitelpunkt V₁', ..., Vₙ' der zweiten Vielzahl einem Scheitelpunkt V₁, ..., Vₙ der ersten Vielzahl entspricht;
- eine Vielzahl von Wänden (125a-125d) die angeordnet sind, um die untere Platte (121) und die obere Platte (122) zu verbinden, wobei die Wände (125a-125d) und die Platten (121, 122) eine Vielzahl von Öffnungen (126a-126d) definieren, durch die der Luftstrom angeordnet ist, um in die Gehäusestruktur (120) ein- und daraus auszutreten;
wobei jede Wand (125a-125d) der Vielzahl von Wänden durch eine jeweilige Kante (127a-127d) definiert ist, die angeordnet ist, um einen Scheitelpunkt V₁, ..., Vₙ der ersten Vielzahl mit einem entsprechenden Scheitelpunkt V₁', ..., Vₙ' der zweiten Vielzahl zu verbinden,
wobei jede der Kanten (127a-127d) ein Profil hat, das auswärts von der Gehäusestruktur (120) hervorsteht, wobei das hervorstehende Profil angeordnet ist, um über eine entsprechende gerade Linie V₁-V₁', ..., Vₙ-Vₙ', die den Scheitelpunkt V₁, ..., Vₙ der ersten Vielzahl mit dem entsprechenden Scheitelpunkt V₁', ...,Vₙ' der zweiten Vielzahl verbindet, derart hervorzustehen, dass wenn ein Luftstrom durch eine erste Öffnung (126a) in die Gehäusestruktur (120) eintritt, das hervorstehende Profil der Kante (127b) die Abtrennung eines Teils der Strömung von der Wand (125b) erzeugt, wodurch an einer zweiten Öffnung (126b), die anliegend an der Wand (125b) gegenüber der ersten Öffnung (126a) ist, ein Niederdruckbereich geschaffen wird, der die Durchflussrate des eintretenden Luftstroms, der in die Gehäusestruktur (120) eintritt, erhöht,
wobei die Windturbine (100) **dadurch gekennzeichnet ist, dass** die Kante (127a, 127b, 127c, 127d) eine kurvenförmige Geometrie mit zu einer jeweiligen Öffnung (126d, 126a, 126b, 126c) ausgerichteter Konkavität hat.

2. Windturbine (100) nach Anspruch 1, wobei an der Außenfläche der Wände (125a-125d) Rippen bereitgestellt sind, um die strukturelle Festigkeit der Wände (125a-125d) zu erhöhen und um einer Abtrennung der Randschicht des Luftstroms von den Wänden (125a-125d) zu unterstützen.

3. Windturbine (100) nach Anspruch 1, wobei mindestens eine Wand (125a-125d) der Vielzahl von Wänden einen hervorstehenden Abschnitt (125a'-125d') hat, der derart konfiguriert ist, dass sein Überstand auf der Ebene der unteren Platte (121) außerhalb eines idealen Vielecks ist, das die Scheitelpunkte V₁, ..., Vₙ der unteren Platte (121) miteinander verbindet, wobei der hervorstehende Abschnitt (125a' -125d'), der an der Kante (127a- 127d) beginnt, und ein ausgesparter Abschnitt (125a"-125d"), dessen Überstand auf der Ebene der unteren Platte (121) innerhalb des Vielecks ist, wobei sich der ausgesparte Abschnitt (125a"-125d") aufwärts zu einer Öffnung (126a-126d) anliegend an der Wand (125a-125d) über ein Ende (127a'-127d') der Wand gegenüber der Kante (127a-127d) erstreckt, wobei der ausgesparte Abschnitt (125a"-125d") konfiguriert ist, um die Luftstromabtrennung von der Wand (125a-125d) für jede Richtung des Luftstroms zu unterstützen.

4. Windturbine (100) nach Anspruch 3 wobei mindestens eine von der unteren Platte (121) und der oberen Platte (122) durch Profile (123a-123d, 123a'-123d') definiert ist, die jeweils zwei der Scheitelpunkte V₁, ..., Vₙ der ersten Vielzahl und/oder die Scheitelpunkte V₁', ..., Vₙ' der zweiten Vielzahl verbinden, wobei die Profile (123a-123d, 123a'-123d') zu der Drehachse z in Bezug auf das Vieleck derart ausgespart sind, um in die ausgesparten Abschnitte (125a"-125d") der Wände (125a-125d) der Vielzahl von Wänden zu passen.

5. Windturbine (100) nach Anspruch 4, wobei die Profile (123a-123d, 123a'-123d') einen maximalen Punkt M nahe dem Ende (127a'-127d') der Wände (125a-125d) haben, wobei der maximale Punkt M der der Punkt der Profile (123a-123d, 123a'-123d') ist, der am meisten durch das entsprechende Segment beabstandet ist, das jeweils zwei der Scheitelpunkte V₁, ..., Vₙ und/oder der Scheitelpunkte V₁', ..., Vₙ' verbindet.

6. Windturbine (100) nach einem der vorherigen Ansprüche, wobei die Gehäusestruktur (120) vier Wände (125a-125d) identischer Form umfasst, die sich in einem Winkel von 90° voneinander um die Achse z befinden, wobei vier Wände (125a-125d), die vier Öffnungen (126a-126d) definieren, angeordnet sind, um als Ein-/Auslass des Luftstroms in die/aus der Gehäusestruktur (120) zu dienen.

7. Windturbine (100) nach Anspruch 6, wobei eine erste Öffnung (126a) der vier Öffnungen (126a-126d) konfiguriert ist, um zu ermöglichen, dass eine Hauptkomponente des Luftstroms derart in die erste Öffnung (126a), die anliegend an einer ersten Wand (125a) der vier Wände (125a-125d) und an einer zweiten Wand (125b) der vier Wände (125a-125d), die im Wesentlichen orthogonal zur ersten Wand (125a) ist, eintritt, dass wenn die Hauptkomponente des Luftstroms in die erste Öffnung (126a) eintritt, ein Teil des Luftstroms durch die erste und zweite Wand (125a, 125b) gehemmt wird, wodurch ein Niederdruckbereich an einer zweiten Öffnung (126b), die anliegend an einer zweiten Wand (125b) ist, und an einer vierten Öffnung (126d), die anliegend an der ersten Wand (125a) ist, einer dritten Öffnung (126c), die gegenüber der ersten Öffnung (126a) ist, erzeugt wird.

8. System zur Windenergieerzeugung (200) umfassend mindestens zwei Windturbinen (100) nach einem der vorherigen Ansprüche, wobei sich mindestens zwei Windturbinen (100) derart übereinander befinden, dass die Drehachsen z der Windturbinen (100) übereinstimmen.

9. System zur Windenergieerzeugung (200), nach Anspruch 8, wobei die Windturbinen (100) drehbar in Bezug auf die Drehachse z um einen vorbestimmten Winkel, der auf zwischen 20° und 40° eingestellt ist, voneinander versetzt sind.

## Revendications

1. Turbine éolienne à axe vertical (100), comprenant :
- un rotor (110) présentant un axe de rotation substantiellement vertical z, ledit rotor (110) comprenant une pluralité de pales (111) agencées pour tourner autour dudit axe de rotation z sous l'effet d'une traînée aérodynamique opposée à un débit d'air s'engouffrant dans lesdites pales (111) ;
- une structure de carter (120) dans lequel est placé ledit rotor (110), ladite structure de carter (120) comprenant :
- une plaque inférieure (121) substantiellement perpendiculaire audit axe de rotation z, ladite plaque inférieure (121) étant définie par une première pluralité de sommets V₁,...,Vₙ;
- une plaque supérieure (122) substantiellement perpendiculaire audit axe de rotation z, ladite plaque supérieure (122) étant définie par une deuxième pluralité de sommets V₁',...,Vₙ', chaque sommet de ladite deuxième pluralité de V₁',...,Vₙ', correspondant à un sommet V₁,...,Vₙ de ladite première pluralité ;
- une pluralité de parois (125a-125d) agencées pour raccorder ladite plaque inférieure (121) et ladite plaque supérieure (122), lesdites parois (125a-125d) et lesdites plaques (121,122) définissant une pluralité d'ouvertures (126a-126d) à travers lesquelles ledit débit d'air est agencé pour entrer dans ladite structure de carter (120) et en sortir ;
chaque paroi (125a-125d) de ladite pluralité de parois étant définie par un bord correspondant (127a-127d) agencé pour raccorder un sommet V₁,...,Vₙ de ladite première pluralité à un sommet correspondant V₁',...,Vₙ' de ladite deuxième pluralité,
chacune desdites parois (127a-127d) présentant un profil saillant vers l'extérieur de ladite structure de carter (120), ledit profil saillant étant agencé pour faire saillie au-delà d'une ligne droite V₁-V₁',...,Vₙ-Vₙ' correspondante raccordant ledit sommet V₁,...,Vₙ de ladite première pluralité audit sommet correspondant V₁',...,Vₙ' de ladite deuxième pluralité, de sorte que lorsqu'un débit d'air introduit pénètre dans ladite structure de carter (120) par une première ouverture (126a), ledit profil saillant dudit bord (127b) génère la séparation d'une partie du débit depuis ladite paroi (125b) en créant, à une deuxième ouverture (126b) adjacente à ladite paroi (125b) située face à la première ouverture (126a), une zone de basse pression augmentant le débit dudit débit d'air introduit pénétrant dans ladite structure de carter (120),
ladite turbine éolienne (100) étant **caractérisée en ce que** ledit bord (127a, 127b, 127c, 127d) présente une forme curvilinéaire, avec une concavité orientée vers une ouverture respective (126d, 126a, 126b, 126c).

2. Turbine éolienne (100) selon la revendication 1, des nervures pratiquées sur la surface extérieure desdites parois (125a-125d) étant configurées pour accroître la résistance structurelle desdites parois (125a-125d) et favoriser une séparation de la couche limite dudit débit d'air provenant desdites parois (125a-125d).

3. Turbine éolienne (100) selon la revendication 1, au moins une paroi (125a-125d) de ladite pluralité de parois présentant une partie saillante (125a'- 125d'), configurée de telle façon que sa saillie dans le plan de ladite plaque inférieure (121) est extérieure à un polygone idéal raccordant l'un à l'autre les sommets V₁,...,Vₙ de ladite plaque inférieure (121), ladite partie saillante (125a'-125d') partant dudit bord (127a- 127d), et une partie évidée (125a"-125d") dont la saillie sur ledit plan de ladite plaque inférieure (121) est intérieure audit polygone, ladite partie évidée (125a"-125d") s'étendant jusqu'à une ouverture (126a-126d) adjacente à ladite paroi (125a-125d) au-delà d'une extrémité (127a'- 127d') de ladite paroi opposée audit bord (127a- 127d), ladite partie évidée (125a"-125d") étant configurée de façon à assister la séparation dudit débit d'air depuis ladite paroi (125a-125d) pour chaque direction dudit débit d'air.

4. Turbine éolienne (100) selon la revendication 3, au moins une des plaques que sont ladite plaque inférieure (121) et ladite plaque supérieure (122) étant définie par des profils (123a-123d,123a'-123d') raccordant deux à deux lesdits sommets V₁,...,Vₙ de ladite première pluralité et/ou lesdits sommets V₁',...,Vₙ' de ladite deuxième pluralité, lesdits profils (123a-123d,123a'-123d') étant évidés vers ledit axe de rotation z relativement audit polygone, de façon à tenir dans lesdites parties évidées (125a"-125d") desdites parois (125a-125d) de ladite pluralité de parois.

5. Turbine éolienne (100) selon la revendication 4, lesdits profils (123a- 123d,123a'-123d') présentant un point de M maximum à proximité de ladite extrémité (127a'-127d') desdites parois (125a-125d), ledit point de M maximum étant le point desdits profils (123a- 123d,123a'-123d') qui se distance le plus par le segment correspondant raccordant, deux par deux, lesdits sommets V₁,...,Vₙ et/ou lesdits sommets V₁',...,Vₙ'.

6. Turbine éolienne (100) selon une quelconque des revendications précédentes, ladite structure de carter (120) comprenant quatre parois (125a-125d) de forme identique, situées à un angle de 90° l'une de l'autre autour dudit axe z, lesdites quatre parois (125a-125d) définissant quatre ouvertures (126a-126d) disposées de façon à servir d'entrées/sorties dudit débit d'air entrant dans ladite structure de carter (120) et en sortant.

7. Turbine éolienne (100) selon la revendication 6, une première ouverture (126a) desdites quatre ouvertures (126a-126d) étant configurée pour permettre à un principal composant dudit débit d'air d'entrer, ladite première ouverture (126a) étant adjacente à une première paroi (125a) desdites quatre parois (125a-125d), et à une deuxième paroi (125b) desdites quatre parois (125a-125d), substantiellement perpendiculaire à ladite première paroi (125a), de sorte que lorsque le principal composant dudit débit d'air s'introduit dans ladite première ouverture (126a), une partie dudit débit d'air est entravée par lesdites première et deuxième parois (125a-125b), en créant une zone de basse pression à une deuxième ouverture (126b), adjacente à ladite deuxième paroi (125b), et une quatrième ouverture (126d) adjacente à ladite première paroi (125a), une troisième ouverture (126c) étant située face à ladite première ouverture (126a).

8. Système de production d'énergie éolienne (200) comprenant au moins deux turbines éoliennes (100) selon une quelconque des revendications précédentes, lesdites au moins deux turbines éoliennes (100) étant situées l'une au-dessus de l'autre de telle façon que lesdits axes de rotation z desdites turbines éoliennes (100) sont coïncidents.

9. Système de production d'énergie éolienne (200) selon la revendication 8, lesdites turbines éoliennes (100) étant décalées l'une de l'autre par rotation relativement audit axe de rotation z, d'un angle prédéterminé réglé entre 20° et 40°.
